# EUROPÄISCHE PATENTSCHRIFT

(11) **EP 3 650 677 B1**
(45) Veröffentlichungstag und Bekanntmachung des Hinweises auf die Patenterteilung: **23.06.2021**
(21) Anmeldenummer: 19200204.6
(22) Anmeldetag: 27.09.2019
(51) Int. Cl.: F02D 41/00, F02B 37/18, F02B 37/10, F02D 41/02, F01N 3/20, F01N 3/28, F01N 5/04, F01N 9/00, F02B 37/24, F02B 33/40, F02B 37/04, F02B 37/14, F02B 39/10

(54) **VERFAHREN ZUM BETREIBEN EINES BRENNKRAFTMASCHINENSYSTEMS**
METHOD FOR OPERATING AN INTERNAL COMBUSTION ENGINE SYSTEM
PROCÉDÉ DE FONCTIONNEMENT D'UN SYSTÈME DE MOTEUR À COMBUSTION INTERNE

(30) Priorität: 26.10.2018 DE 102018218406
(43) Veröffentlichungstag der Anmeldung: 13.05.2020
(73) Patentinhaber: BMTS Technology GmbH & Co. KG, 70376 Stuttgart (DE)
(72) Erfinder: WEISS, Hartmut, 70569 Stuttgart (DE); BÜRKLE, Michael, 70736 Fellbach (DE)
(74) Vertreter: BRP Renaud & Partner mbB Rechtsanwälte Patentanwälte Steuerberater

(56) Entgegenhaltungen:
- EP-A2- 1 749 990
- EP-A2- 3 225 824
- WO-A1-2005/098222
- DE-A1-102010 043 327
- US-A1- 2005 060 999

## Beschreibung

Die vorliegende Erfindung betrifft ein Verfahren zum Betreiben eines Brennkraftmaschinensystems mit einer Brennkraftmaschine, einem Abgasturbolader sowie einer Schadstoffkonvertierungseinrichtung. Die Erfindung betrifft des Weiteren ein derartig betriebenes Brennkraftmaschinensystem.

In der Entwicklung von Brennkraftmaschinensystemen spielen die Effizienzsteigerung sowie die Reduzierung von Schadstoffemissionen wichtige Rollen.

Zur Effizienzsteigerung ist es bekannt, einen Abgasturbolader einzusetzen, der ein in einer Abgasanlage des Brennkraftmaschinensystems eingebundenes Turbinenrad, das vom Abgas der Brennkraftmaschine angetrieben ist, und ein Verdichterrad aufweist, welches in einer Frischluftanlage des Brennkraftmaschinensystems eingebunden ist, um der Brennkraftmaschine zuzuführende Frischluft zu verdichten. Zur Regulierung des Abgasturboladers kommen gewöhnlich ein Wastegateventil und/oder eine variable Turbinengeometrie zum Einsatz, welche das Beaufschlagen des Turbinenrads mit Abgas variieren können.

Zur Reduzierung von Schadstoffemissionen kommen gewöhnlich Schadstoffkonvertierungseinrichtungen zum Einsatz, welche in der Abgasanlage zu einer Reduzierung der Schadstoffe im Abgas führen. Derartige Schadstoffkonvertierungseinrichtungen weisen in der Regel eine Schwelltemperatur auf, ab welcher die Reduzierung von Schadstoffen einsetzt. Unterhalb dieser Schwelltemperatur erfolgt in der Schadstoffkonvertierungseinrichtung keine oder eine im Vergleich zur Schwelltemperatur geringere Reduzierung der Schadstoffe. Weist also die Schadstoffkonvertierungseinrichtung eine Temperatur unterhalb der Schwelltemperatur auf, ist der im ausgestoßenen Abgas enthaltene Anteil an Schadstoffen erhöht, was zu einer schlechteren Umweltbilanz des Brennkraftmaschinensystems führt.

Ein solches Brennkraftmaschinensystem ist aus der EP 1 243 767 A2 bekannt. Der Abgasturbolader weist hierbei ein Wastegateventil auf, welches verstellbar ist und in einer Bypassstellung Abgas am Turbinenrad über einen Bypasskanal vorbeiführt. In der Bypassstellung des Wastegateventils gelangt somit Abgas mit einer erhöhten Temperatur zu der stromab des Bypasskanals angeordneten Schadstoffkonvertierungseinrichtung, so dass die Schadstoffkonvertierungseinrichtung in dieser Stellung des Wastegateventils schneller die Schwelltemperatur erreicht.

Ein ähnlicher Ansatz wird in der DE 198 33 619 A1 verfolgt. Bei diesem Brennkraftmaschinensystem sind zwei das Turbinenrad umgehende Bypasskanäle vorgesehen, wobei in einem der Bypasskanäle ein zur stromab der Bypasskanäle angeordneten Schadstoffkonvertierungseinrichtung zusätzlich vorgesehener Startkatalysator angeordnet ist.

Aus der EP 1 396 619 A1 ist ein Brennkraftmaschinensystem bekannt, welches im Wesentlichen dem in der EP 1 243 767 A2 gezeigten Brennkraftmaschinensystem entspricht mit dem Unterschied, dass der Abgasturbolader ferner mit einer variablen Turbinengeometrie versehen ist. Zum Erreichen der Schwelltemperatur der Schadstoffkonvertierungseinrichtung wird dabei das Wastegateventil in die Bypassstellung verstellt.

In der US 2005/0060999 A1 ist ein Brennkraftmaschinensystem gezeigt, das eine Schadstoffkonvertierungseinrichtung und eine variable Turbinengeometrie aufweist. Die variable Turbinengeometrie kann insbesondere in einem Heizbetrieb, weiter geschlossen werden, als in einem Normalbetrieb des Brennkraftmaschinensystems vorgesehen ist. Ein geringer Abgasstrom kann auch bei vollständiger Schließung durch Bypassöffnungen über Turbinengehäuse und Turbinenrad abfließen.

Aus der EP 1 749 990 A2 ist ein Brennkraftmaschinensystem mit einem elektromotorisch unterstütztem Turbolader bekannt. Der Elektromotor kommt zum Verdichten von Luft zum Einsatz, wenn der Druck in einer Frischluftanlage des Brennkraftmaschinensystems unterhalb eines vorgegebenen Werts fällt.

Die DE 10 2010 043 327 A1 offenbart ein Brennkraftmaschinensystem mit zwei Schadstoffkonvertierungseinrichtungen, welche in parallelen Kanälen einer Abgasanlage angeordnet sind. Es kommt ein Heizbetrieb zum Einsatz, bei dem ein geöffnetes Bypassventil einen Turbinen-Bypasskanal freigibt und den Abgaspfad zur Turbine versperrt.

Die vorliegende Erfindung beschäftigt sich mit der Aufgabe, für ein Verfahren zum Betreiben eines Brennkraftmaschinensystems sowie für ein derart betriebenes Brennkraftmaschinensystem verbesserte oder zumindest andere Ausführungsformen anzugeben, die sich insbesondere durch eine erhöhte Effizienz und/oder eine verbesserte Umweltbilanz auszeichnet.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einem eine Brennkraftmaschine und einen Abgasturbolader sowie eine Schadstoffkonvertierungseinrichtung aufweisenden Brennkraftmaschinensystem eine variable Turbinengeometrie des Abgasturboladers zum Erreichen einer Schwelltemperatur der Schadstoffkonvertierungseinrichtung über eine in einem Regelbetrieb vorgesehene Minimalstellung der variablen Turbinengeometrie, die eine Mindestdurchströmung der variablen Turbinengeometrie definiert, hinaus zu verschließen, um die Durchströmung der Turbine weiter zu verringern, insbesondere zu unterbrechen. In der Folge gelangt das Abgas mit einer erhöhten Enthalpie, insbesondere aufgrund der reduzierten bzw. entfallenden Wärmeverluste und/oder kinetischen Verluste, die beim Beaufschlagen des Turbinenrads entstehen, zur Schadstoffkonvertierungseinrichtung, so dass die Schadstoffkonvertierungseinrichtung schneller die Schwelltemperatur erreicht. Die Schwelltemperatur definiert hierbei eine Temperatur der Schadstoffkonvertierungseinrichtung, oberhalb welcher in der Schadstoffkonvertierungseinrichtung Schadstoffe reduziert werden und/oder unterhalb welcher eine verringerte oder keine Reduzierung von Schadstoffen stattfindet. Mit der erfindungsgemäßen Lösung wird also mit der Schadstoffkonvertierungseinrichtung schneller eine Reduzierung der Schadstoffe realisiert, so dass weniger Schadstoffe ausgestoßen werden und somit eine verbesserte Umweltbilanz des Brennkraftmaschinensystems erzielt wird. Das schnellere Erreichen der Schwelltemperatur führt ferner dazu, dass der Abgasturbolader schneller in einem Regelbetrieb betrieben werden kann, insbesondere ein Aufladen bzw. Verdichten von der Brennkraftmaschine zuzuführender Frischluft schneller erfolgt, so dass die Effizienz des Brennkraftmaschinensystems verbessert wird.

Dem Erfindungsgedanken entsprechend weist das Brennkraftmaschinensystem die Brennkraftmaschine, den Abgasturbolader sowie die Schadstoffkonvertierungseinrichtung auf. Das Brennkraftmaschinensystem weist ferner eine Frischluftanlage zur Zuführung von Frischluft zur Brennkraftmaschine sowie eine Abgasanlage zum Abführen von Abgas auf. Der Abgasturbolader weist neben dem Turbinenrad ein in der Frischluftanlage eingebundenes Verdichterrad zum Verdichten der Frischluft auf, welches vom Turbinenrad, das in der Abgasanlage eingebunden ist, angetrieben ist. Der Abgasturbolader weist ferner ein verstellbares Wastegateventil auf, welches zwischen einer Schließstellung und einer Offenstellung oder Bypassstellung verstellbar ist. In der Bypassstellung des Wastegateventils wird Abgas über einen Bypasskanal am Turbinenrad vorbeigeführt. Die Schadstoffkonvertierungseinrichtung dient der Reduzierung von Schadstoffen im Abgas und ist zweckmäßig in der Abgasanlage eingebunden. Die Schadstoffkonvertierungseinrichtung weist die Schwelltemperatur auf, oberhalb welcher Schadstoffe in der Schadstoffkonvertierungseinrichtung reduziert werden. Die variable Turbinengeometrie des Abgasturboladers weist das Turbinenrad in einer Umfangsrichtung umgebende und verstellbare Leitelemente auf, wobei die Leitelemente in der Umfangsrichtung aufeinanderfolgen und in der jeweiligen Stellung einen für Abgas durchströmbaren Gesamtquerschnitt bilden. Dabei wird in einem Regelbetrieb des Brennkraftmaschinensystems, in dem die Schadstoffkonvertierungseinrichtung eine Temperatur oberhalb der Schwelltemperatur aufweist, die variable Turbinengeometrie derart betrieben, dass die Leitelemente einen Gesamtquerschnitt bilden, der von einem Regelminimalwert bis zu einem Regelmaximalwert beträgt. Im Regelbetrieb entspricht der Gesamtquerschnitt also zumindest dem Regelminimalwert. Die entsprechende Stellung der variablen Turbinengeometrie ist auch als die sogenannte Minimalströmung-Stellung, auch Minimal-Flow-Stellung genannt, bekannt. Das Brennkraftmaschinensystem wird erfindungsgemäß demgegenüber in einem Aufheizbetrieb betrieben, wenn die Temperatur der Schadstoffkonvertierungseinrichtung unterhalb der Schwelltemperatur liegt. Im Gegensatz zum Regelbetrieb wird im Aufheizbetrieb die variable Turbinengeometrie mit den Leitelementen derart verstellt, dass der von den Leitelementen gebildete Gesamtquerschnitt kleiner ist als der Regelminimalwert. In der Folge gelangt kein oder zumindest ein reduzierter Anteil des Abgases zum Turbinenrad, so dass entsprechende Enthalpieverluste, insbesondere Wärmeverluste, des Abgases reduziert sind. Folglich gelangt das Abgas mit einer erhöhten Enthalpie, insbesondere einer erhöhten Temperatur, zur Schadstoffkonvertierungseinrichtung, so dass die Schadstoffkonvertierungseinrichtung die Schwelltemperatur schneller erreicht. Die reduzierte Strömung von Abgas zum Turbinenrad führt ferner dazu, dass das Verdichterrad für durch die Frischluftanlage strömende Frischluft einen größeren Widerstand bildet, insbesondere als Drossel wirkt. Die Folge ist eine Erhöhung des Kraftstoffanteils in einem der Brennkraftmaschine zugeführten Frischluft-Kraftstoff-Gemisch, insbesondere ohne weitere Maßnahmen. Folglich gelangen mehr unverbrannte Anteile des Kraftstoffs in die Abgasanlage, so dass diese in der Abgasanlage, insbesondere in der Schadstoffkonvertierungseinrichtung nachverbrennen. Auch hierdurch wird das Aufheizen der Schadstoffkonvertierungseinrichtung beschleunigt.

Im Gegensatz zu aus dem Stand der Technik bekannten variablen Turbinengeometrien und deren Betriebsverfahren, bei denen die Leitelemente in ihrer jeweiligen Stellung einen für Abgas in Richtung des Turbinenrads durchströmbaren Gesamtquerschnitt bilden, der einen dem Regelminimalwert entsprechenden Minimum nicht unterschreitet, um ein Abströmen von Abgas aus der Brennkraftmaschine stets zu erlauben und somit die Brennkraftmaschine, insbesondere auch im Leerlauf, betreiben zu können, wird dieser Regelminimalwert bzw. die entsprechende Stellung der Leitelemente, auch als Minimal-Strömungs-Stellung oder Minimum-Flow-Stellung bekannt, vorliegend im Regelbetrieb eingehalten und im Aufheizbetrieb unterschritten, insbesondere möglichst auf null reduziert. Dies führt zu einem schnelleren Aufheizen der Schadstoffkonvertierungseinrichtung im Aufheizbetrieb.

Die Schadstoffkonvertierungseinrichtung ist vorteilhaft stromab des Turbinenrads des Abgasturboladers angeordnet. Auf diese Weise gelangt Abgas im Regelbetrieb mit einer erhöhten Enthalpie zum Turbinenrad, so dass der Abgasturbolader effizienter betrieben wird.

Die Schadstoffkonvertierungseinrichtung ist zweckmäßig stromab des Bypasskanals in der Abgasanlage angerordnet. Somit strömt auch über den Bypasskanal am Turbinenrad vorbeigeführtes Abgas zur Schadstoffkonvertierungseinrichtung.

Das Wastegateventil ist zwischen der Bypassstellung und einer Schließstellung verstellbar, in der der Bypasskanal verschlossen wird und in der somit Abgas, insbesondere über variable Turbinengeometrie, in Richtung des Turbinenrads strömt.

Der Regelminimalwert bzw. die zugehörige Stellung der Leitelemente, also insbesondere die sogenannte Minimal-Flow-Stellung, entspricht einem Gesamtquerschnitt, welcher im Regelbetrieb der Brennkraftmaschine das Betreiben der Brennkraftmaschine, insbesondere zur Beschleunigung , ermöglicht bzw. sicherstellt.

Die Schadstoffkonvertierungseinrichtung ist vorzugsweise derart ausgestaltet, dass sie die im Abgas enthaltenen Schadstoffe durch Konvertierung reduziert.

Dies erfolgt vorzugsweise durch eine Reaktion von im Abgas enthaltene Bestandteile und/oder ins Abgas eingebrachte Bestandteile. Hierbei handelt es sich insbesondere um Oxidations- und/oder Reduktionsreaktionen. Die Schadstoffkonvertierungseinrichtung weist zu diesem Zweck bevorzugt einen Katalysator auf, der die Schwelltemperatur bzw. Betriebstemperatur vorgibt, insbesondere dieser entspricht. Die Schwelltemperatur entspricht vorteilhaft einer Betriebstemperatur der Schadstoffkonvertierungseinrichtung, insbesondere des Katalysators, unterhalb welcher die Konvertierungsrate der Schadstoffkonvertierungseinrichtung erheblich reduziert ist. Alternativ kann die Schwelltemperatur auch einer Starttemperatur der Schadstoffkonvertierungseinrichtung, insbesondere des Katalysators, ab welcher die Konvertierung der Schadstoffe startet bzw. einsetzt.

Unter Schadstoffen sind vorliegend insbesondere Kohlenmonoxid, Stickoxide, auch NOx genannt, und dergleichen zu verstehen.

Der Aufheizbetrieb des Brennkraftmaschinensystems erfolgt, wie vorstehend beschrieben, wenn die Schadstoffkonvertierungseinrichtung, insbesondere der Katalysator der Schadstoffkonvertierungseinrichtung, eine Temperatur unterhalb der Schwelltemperatur aufweist. Dies liegt insbesondere während eines Kaltstarts des Brennkraftmaschinensystems vor, bei dem die Schadstoffkonvertierungseinrichtung Umgebungstemperaturen aufweist. Vorstellbar ist es auch, dass die Temperatur der Schadstoffkonvertierungseinrichtung, insbesondere des Katalysators, im laufenden Betrieb des Brennkraftmaschinensystems, insbesondere im Leerlauf und/oder sehr niedrigen Umgebungstemperaturen, unter die Schwellwerttemperatur fällt. Auch bei derartigen Konstellationen kann das Brennkraftmaschinensystem in den Aufheizbetrieb übergehen.

Erreicht die Schadstoffkonvertierungseinrichtung die Schwelltemperatur und/oder überschreitet die Schwelltemperatur, wird das Brennkraftmaschinensystem zweckmäßig im Regelbetrieb betrieben.

Die Leitelemente der variablen Turbinengeometrie können prinzipiell beliebig ausgestaltet sein, sofern sie verstellbar sind, das Turbinenrad umgeben und in ihrer jeweiligen Stellung einen durchströmbaren Gesamtquerschnitt für das Abgas in Richtung des Turbinenrads bilden. Die Leitelemente sind vorteilhaft als Leitschaufeln ausgebildet.

Vorteilhaft sind Ausführungsformen, bei denen die variable Turbinengeometrie im Aufheizbetrieb geschlossen wird, derart, dass die Leitelemente, abgesehen von entsprechenden Toleranzen, eine in Umfangsrichtung geschlossene Fläche bilden. In der Folge strömt, abgesehen von genannten Toleranzen und/oder unerwünschten Leckagen, kein Abgas zum Turbinenrad. Somit wird der Anteil des zur Schadstoffkonvertierungseinrichtung strömenden Abgases maximiert, so dass diese die Schwelltemperatur schneller erreicht. Erfindungsgemäß wird hierbei das Wastegateventil in die Bypasstellung verstellt, um eine möglichst ungehinderte Strömung des Abgases zur Schadstoffkonvertierungseinrichtung zu ermöglichen. Auf diese Weise wird auch ein ausreichendes Abströmen des Abgases aus der Brennkraftmaschine gewährleistet.

Das Wastegateventil gibt im Aufheizbetrieb in der Bypassstellung den durchströmbaren Querschnitt des Bypasskanals vorzugsweise maximal frei, wird insbesondere maximal geöffnet bzw. so geöffnet, dass die Schadstoffkonvertierungseinrichtung vom Bypassmassenstrom angeströmt wird, Dies führt zu einer Minimierung der durch das Wastegateventil bedingten Hinderungen, insbesondere Widerstände, für das Abgas, so dass dieses mit maximal möglicher Enthalpie zur Schadstoffkonvertierungseinrichtung gelangt. Maximal geöffnet heißt also insbesondere, dass das Abgas möglichst ungehindert am Wastegateventil vorbei und durch den Bypasskanal zur Schadstoffkonvertierungseinrichtung strömt.

Da in der geschlossenen Stellung der variablen Turbinengeometrie im Aufheizbetrieb ein Verdichten der Luft in der Frischluftanlage mit Hilfe des Turbinenrads verhindert ist, wird die Brennkraftmaschine im Aufheizbetrieb in der Art eines Saugmotors betrieben. Dies erfolgt insbesondere im Leerlauf der Brennkraftmaschine.

Bei steigender Lastanforderung an die Brennkraftmaschine kann das Brennkraftmaschinensystem im herkömmlichen Kaltstartmodus betrieben werden, das heißt, dass das Wastegateventil und die variable Turbinengeometrie entsprechend der Lastanforderungen verstellt werden. Unter Lastanforderung ist vorliegend insbesondere das von der Brennkraftmaschine bereitzustellende Drehmoment zu verstehen.

Alternativ ist es vorstellbar, das Brennkraftmaschinensystem mit einem Elektromotor zu versehen, mit dem die Luft in der Frischluftanlage verdichtet werden kann. Der Elektromotor kann dabei im Betrieb das Verdichterrad des Abgasturboladers und/oder einen vom Verdichterrad separaten Zusatz-Verdichter zum Verdichten der Luft antreiben. Dabei wird bei einer Überschreitung der Lastanforderung an die Brennkraftmaschine oberhalb eines Grenzwerts, nachfolgend auch erster Grenzwert genannt, der Elektromotor betrieben, um die Luft in der Frischluftanlage zu verdichten. Der erste Grenzwert ist zweckmäßig derart gewählt, dass er oberhalb der Lastanforderung liegt, welche die Brennkraftmaschine in der Aufheizstellung der Leitelemente und in der Bypassstellung des Wastegateventils bereitstellen kann. In diesem Fall wird das Brennkraftmaschinensystem also weiterhin im Aufheizbetrieb betrieben und der Elektromotor zusätzlich aktiviert, um durch das Verdichten der Luft der Lastanforderung oberhalb des ersten Grenzwerts zu genügen. Sinkt die Lastanforderung unterhalb des ersten Grenzwerts, kann der Elektromotor deaktiviert werden.

Bevorzugte Ausführungsformen sehen vor, dass bei einer größeren Lastanforderung an die Brennkraftmaschine, das heißt beim Überschreiten der Lastanforderung oberhalb eines zweiten Grenzwerts, der größer ist als der erste Grenzwert, das Brennkraftmaschinensystem im herkömmlichen Kaltstartmodus betrieben wird, das heißt, dass das Wastegateventil und die variable Turbinengeometrie entsprechend der Lastanforderungen verstellt werden, sich die variable Turbinengeometrie also nicht mehr im vollständig geschlossenen Zustand befindet. Hierbei kann der Elektromotor weiter betrieben werden.

Sinkt die Lastanforderung unterhalb des zweiten Grenzwerts und weist die Schadstoffkonvertierungseinrichtung eine Temperatur unterhalb der Schwelltemperatur auf, so wird das Brennkraftmaschinensystem bevorzugt wieder im Aufheizbetrieb betrieben, wobei der Elektromotor betrieben wird, wenn die Lastanforderung oberhalb des ersten Grenzwerts liegt.

Beim Umstellen vom Aufheizbetrieb in den Regelbetrieb und/oder in den herkömmlichen Kaltstartmodus erfolgt die Verstellung des Wastegateventils und der variablen Turbinengeometrie bevorzugt derart, dass das Drehmoment und die Drehzahl der Brennkraftmaschine einen möglichst kontinuierlichen Verlauf, das heißt insbesondere möglichst keine Sprünge, aufweisen. Somit gibt es keine oder zumindest reduzierte plötzliche oder abrupte Änderungen im Betrieb des Brennkraftmaschinensystems. Dies führt zu einem erhöhten Komfort für einen Nutzer des Brennkraftmaschinensystems.

Ebenso erfolgen die Aktivierung und die Deaktivierung des Elektromotors jeweils bevorzugt derart, dass das Drehmoment und die Drehzahl der Brennkraftmaschine einen möglichst kontinuierlichen Verlauf, das heißt insbesondere möglichst keine Sprünge, aufweisen. Somit gibt es keinen oder zumindest reduzierte plötzliche oder abrupten Änderungen im Betrieb des Brennkraftmaschinensystems. Dies führt zu einem erhöhten Komfort für einen Nutzer des Brennkraftmaschinensystems.

Bei bevorzugten Ausführungsformen wird das Wastegateventil bereits vor dem Starten der Brennkraftmaschine, insbesondere bereits vor dem Kaltstart, geöffnet. Alternativ oder zusätzlich wird vorteilhaft die variable Turbinengeometrie bereits vor dem Starten der Brennkraftmaschine, insbesondere bereits vor dem Kaltstart, möglichst geschlossen, besonders bevorzugt gänzlich geschlossen. Somit erfolgt ein schnelleres und/oder oder effizienteres Aufheizen im anschließenden Aufheizbetrieb, so dass die Umweltbilanz verbessert ist.

Eine weitere Verbesserung der Umweltbilanz des Brennkraftmaschinensystems kann dadurch erzielt werden, dass in der Abgasanlage, insbesondere stromauf der Schadstoffkonvertierungseinrichtung, eine Zusatz-Schadstoffreduzierungseinrichtung angeordnet wird, derart, dass das durch den Bypass strömende Abgas durch die Zusatz-Schadstoffreduzierungseinrichtung strömt. Zu diesem Zweck kann die Zusatz-Schadstoffreduzierungseinrichtung im Bypasskanal, stromauf des Bypasskanals oder stromab des Bypasskanals und stromauf der Schadstoffkonvertierungseinrichtung angeordnet sein. Die Zusatz-Schadstoffreduzierungseinrichtung ist dabei derart ausgestaltet, dass eine Betriebstemperatur der Zusatz-Schadstoffreduzierungseinrichtung schneller erreicht wird als die Schwelltemperatur der Schadstoffkonvertierungseinrichtung. Dies wird insbesondere durch eine kleinere Dimensionierung der Zusatz-Schadstoffreduzierungseinrichtung realisiert. Insbesondere kann die Zusatz-Schadstoffreduzierungseinrichtung einen Katalysator aufweisen, der entsprechend kleiner ausgestaltet ist, als der Katalysator der Schadstoffkonvertierungseinrichtung. In der Folge erfolgt bereits eine Reduzierung von Schadstoffen im Abgas, bevor die Schadstoffkonvertierungseinrichtung ihre Schwelltemperatur erreicht.

Es versteht sich, dass neben dem Verfahren zum Betreiben des Brennkraftmaschinensystems auch ein derart betriebenes Brennkraftmaschinensystem zum Umfang dieser Erfindung gehört.

Hierzu kann das Brennkraftmaschinensystem eine entsprechende Steuereinrichtung aufweisen, die kommunizierend mit dem Abgasturbolader, insbesondere mit der variablen Turbinengeometrie, verbunden ist. Die Steuereinrichtung ist zudem mit dem Wastegateventil kommunizierend verbunden.

Vorstellbar ist es, die variable Turbinengeometrie mit einem mechanischen Anschlag zu versehen, der den Regelminimalwert im Regelbetrieb vorgibt. Insbesondere schlägt zumindest eines der Leitelemente und/oder eine die Leitelemente verstellende Verstelleinrichtung an diesem Anschlag an, so dass der von den Leitelementen gebildete Gesamtquerschnitt den Regelminimalwert nicht unterschreiten kann. Der Anschlag ist dabei vorzugsweise verstellbar und wird im Aufheizbetrieb derart verstellt, dass in der Aufheizstellung der Gesamtquerschnitt kleiner ist als der Regelminimalwert.

Das Brennkraftmaschinensystem kann zum Ermitteln der Temperatur der Schadstoffkonvertierungseinrichtung zumindest einen Temperatursensor aufweisen.

Bevorzugt ist die variable Turbinengeometrie derart ausgestaltet, dass in der Aufheizstellung zumindest zwei in Umfangsrichtung benachbarte Leitelemente, vorzugsweise alle in Umfangsrichtung benachbarte Leitelemente, sich berühren. Durch die Berührung der Leitelemente entsteht ein für Abgas nicht durchströmbarer Abschnitt, so dass hierdurch vorzugsweise die vorstehend erwähnte geschlossene Fläche in Umfangsrichtung gebildet wird.

Als vorteilhaft erweisen sich dabei Ausführungsformen, bei denen in der Aufheizstellung in Umfangsrichtung benachbarte Leitelemente aufeinander aufliegen. In der Folge wird die geschlossene Fläche möglichst vergrößert, so dass die Strömung des Abgases in Richtung des Turbinenrads effektiver verhindert wird.

Besonders bevorzugt sind Ausführungsformen, bei denen in der Aufheizstellung das jeweilige Leitelement mit seiner dem in Umfangsrichtung anschließenden Leitelement zugewandten Spitze auf einen Endabschnitt dieses in Umfangsrichtung anschließenden Leitelements aufliegt, wobei der Endabschnitt des jeweiligen Leitelements ein von der Spitze des Leitelements entfernter Abschnitt des Leitelements ist. Hierdurch ergibt sich eine weitere Vergrößerung der geschlossenen Fläche.

In der Aufheizstellung liegen dabei vorteilhaft die Spitzen der Leitelemente auf der dem Turbinenrad zugewandten Fläche des anschließenden Leitelements. Somit ist eine zuverlässigere Realisierung der Aufheizstellung, insbesondere der geschlossenen Fläche, gewährleistet.

Das Brennkraftmaschinensystem und das zugehörige Betriebsverfahren sind in beliebigen Anwendungen einsetzbar. Vorstellbar ist der Einsatz in einem Kraftfahrzeug, in dem die Brennkraftmaschine, insbesondere auch zusätzlich zu einem elektrischen Antrieb, zum Einsatz kommt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:
- Fig. 1: eine stark vereinfachte, schaltplanartige Darstellung eines Brennkraftmaschinensystems,
- Fig. 2: ein Flussdiagramm zur Erläuterung des Betriebsverfahrens des Brennkraftmaschinensystems,
- Fig. 3 und 4: eine Draufsicht auf eine variable Turbinengeometrie des Brennkraftmaschinensystems, in jeweils unterschiedlicher Stellung,
- Fig. 5: eine stark vereinfachte, schaltplanartige Darstellung des Brennkraftmaschinensystems bei einem anderen Ausführungsbeispiel,
- Fig. 6: eine stark vereinfachte, schaltplanartige Darstellung des Brennkraftmaschinensystems bei einem weiteren Ausführungsbeispiel,
- Fig. 7: ein Flussdiagramm zur Erläuterung des Betriebsverfahrens des Brennkraftmaschinensystems der Figuren 5 und 6.

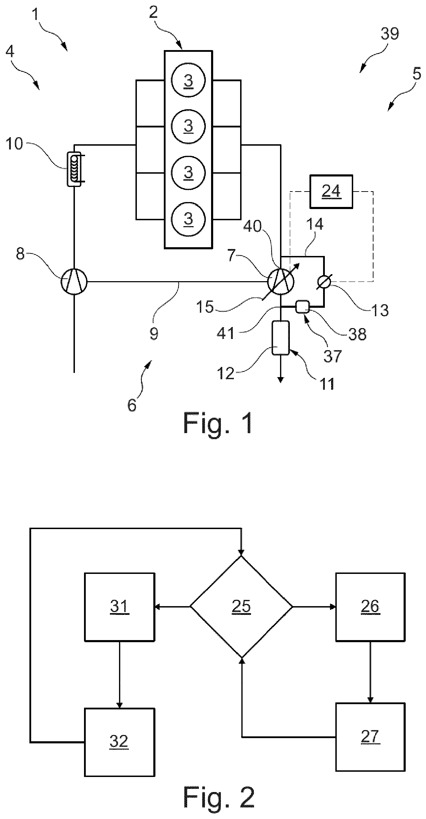

Ein Brennkraftmaschinensystem 1, wie es in Figur 1 stark vereinfacht und schaltplanartig dargestellt ist, umfasst eine Brennkraftmaschine 2, die zumindest einen Brennraum 3 aufweist, wobei in Figur 1 die Brennkraftmaschine 2 rein beispielhaft vier derartige Brennräume 3 aufweist. Im Betrieb der Brennkraftmaschine 2 wird zumindest einem der Brennräume 3 über eine Frischluftanlage 4 Frischluft zugeführt und mit einem Kraftstoff vermischt. Das Gemisch aus Frischluft und Kraftstoff verbrennt im Brennraum 3 zumindest teilweise, so dass Abgas entsteht, das über eine Abgasanlage 5 abgeführt wird. Das Brennkraftmaschinensystem 1 umfasst ferner einen Abgasturbolader 6, der ein in der Abgasanlage 5 eingebundenes Turbinenrad 7 und ein in der Frischluftanlage 4 eingebundenes Verdichterrad 8 aufweist, welche in Figur 1 jeweils symbolisch dargestellt sind. Das Turbinenrad 7 wird vom Abgas angetrieben und treibt somit das Verdichterrad 8 an, welches die Luft in der Frischluftanlage 7 verdichtet. Dies erfolgt beispielsweise über eine Welle 9 des Abgasturboladers 6, welche das Turbinenrad 7 und das Verdichterrad 8 miteinander verbindet. Zum Abkühlen der vom Verdichter 8 verdichteten Frischluft ist in der Frischluftanlage 4 stromab des Verdichterrads 8 ein Ladeluftkühler 10 eingebunden. Das Brennkraftmaschinensystem 1 umfasst ferner eine Schadstoffkonvertierungseinrichtung 11, welche im Betrieb den Anteil von Schadstoffen im Abgas reduziert, bevor das Abgas ausgelassen wird. Die Schadstoffkonvertierungseinrichtung 11 weist eine Schwelltemperatur auf, oberhalb welcher in der Schadstoffkonvertierungseinrichtung 11 die Konvertierung von Schadstoffen im Abgas durch Reaktionen von im Abgas vorhandenen oder eingebrachten Bestandteilen beginnt oder erheblich erhöht ist. Zu diesem Zweck weist die Schadstoffkonvertierungseinrichtung 11 vorzugsweise einen Katalysator 12 auf, der besagte Schwelltemperatur vorgibt bzw. definiert. Die Schwelltemperatur entspricht also einer Starttemperatur, ab welcher die Konvertierung im Katalysator 12 einsetzt bzw. beginnt und welche zwischen 200°C und 300°C betragen kann, oder einer Betriebstemperatur des Katalysators 12, welche oberhalb der Starttemperatur liegt und zwischen 300°C und 1000°C betragen kann.

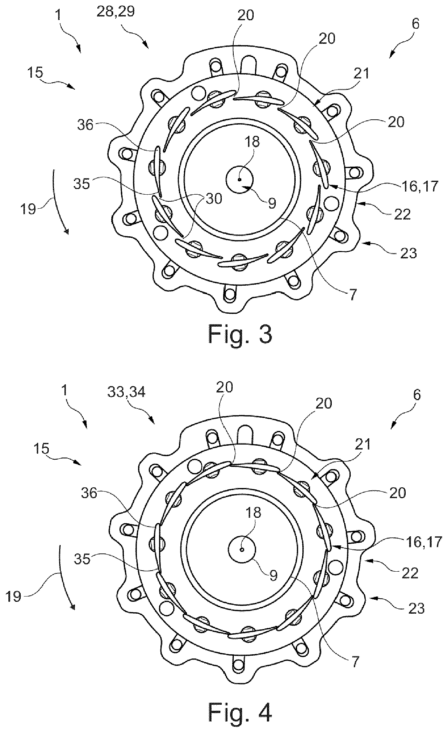

Der Abgasturbolader 7 weist ein Wastegateventil 13 auf, welches zwischen einer Schließstellung und einer Bypassstellung verstellbar ist. In der Bypassstellung des Wastegateventils 13 wird Abgas über einen Bypasskanal 14 der Abgasanlage am Turbinenrad 7 vorbeigeführt, der von einer stromauf des Turbinenrads 7 angeordneten Abzweigstelle 40 bis zu einer stromab des Turbinenrads 7 angeordneten Rückführstelle 41 verläuft. Dabei ist im gezeigten Beispiel die Schadstoffkonvertierungseinrichtung 11 stromab des Bypasskanals 14 in der Abgasanlage 5 eingebunden. Im gezeigten Beispiel ist ferner das Wastegateventil 13 im Bypasskanal 14 angeordnet. Der Abgasturbolader 7 weist ferner eine in Figur 1 durch einen Pfeil symbolisierte variable Turbinengeometrie 15 auf, welche in den Figuren 3 und 4 in einer Draufsicht gezeigt ist. Die variable Turbinengeometrie 15 ist dabei zwischen der Abzweigstelle 40 und der Rückführstelle 41 außerhalb des Bypasskanals 14 angeordnet.

Die variable Turbinengeometrie 15 weist demnach mehrere Leitelemente 16 auf, welche im gezeigten Beispiel jeweils als eine Leitschaufel 17 ausgebildet sind. Die Figuren 3 und 4 zeigen dabei eine Draufsicht auf den Abgasturbolader 1 im Bereich der variablen Turbinengeometrie 15 in Axialrichtung 18 der Welle 9 sowie des Turbinenrads 7, welche in diesen Figuren jeweils angedeutet sind. Die Leitelemente 16 der variablen Turbinengeometrie 15 umgeben das Turbinenrad 7 in einer Umfangsrichtung 19 und sind jeweils verstellbar. Dabei wird zwischen benachbarten Leitelementen 16 jeweils ein für das Abgas in Richtung des Turbinenrads 7 durchströmbarer Querschnitt 20 gebildet (siehe Figur 3), wobei die Summe aller Querschnitte 20 einen Gesamtquerschnitt definiert, der durch das Verstellen der Leitelemente 16 verändert werden kann. Das heißt, dass die Leitelemente 16 in ihrer jeweiligen Stellung einen für Abgas in Richtung des Turbinenrads 7 durchströmbaren Gesamtquerschnitt bilden. Zur verstellbaren Anordnung sind die Leitelemente 16 jeweils in einem Schaufellagerring 21 drehbar gelagert aufgenommen und werden über einen die Leitelemente 16 gemeinsam verstellenden Verstellring 22 einer Verstelleinrichtung 23 verstellt.

Das Brennkraftmaschinensystem 1 weist ferner eine Steuereinrichtung 24 auf, welche, wie mit gestrichelten Linien angedeutet, mit der variablen Turbinengeometrie 15 und dem Wastegateventil 13 kommunizierend verbunden ist, um diese zu steuern und/oder zu verstellen.

Figur 2 zeigt ein Flussdiagramm, welches ein Verfahren zum Betreiben des Brennkraftmaschinensystems 1 veranschaulicht, das mit Hilfe der Steuereinrichtung 24 umgesetzt werden kann.

In einem ersten Verfahrensschritt 25 wird überprüft, ob die Temperatur der Schadstoffkonvertierungseinrichtung 11, insbesondere des Katalysators 12, oberhalb oder unterhalb der Schwelltemperatur liegt. Diese Überprüfung kann mit Hilfe eines nicht gezeigten Temperatursensors oder anderweitig, beispielsweise anhand der stromab der Schadstoffkonvertierungseinrichtung 11 im Abgas vorhandenen Schadstoffe erfolgen.

Weist die Schadstoffkonvertierungseinrichtung 11, insbesondere der Katalysator 12, eine Temperatur auf, die oberhalb der Schwelltemperatur liegt, so wird das Brennkraftmaschinensystem 1 in einem Regelbetrieb 26 betrieben. Im Regelbetrieb 26 erfolgt eine bedarfsgerechte, insbesondere auf die an die Brennkraftmaschine 2 gestellten Leistungsanforderungen angepasste, Verstellung des Wastegateventils 13 und der variablen Turbinengeometrie 15. Die variable Turbinengeometrie 15 wird im Regelbetrieb 26, gemäß dem angedeuteten Verfahrensschritt 27, derart eingestellt, dass die Leitelemente 16 in jeder Stellung einen Gesamtquerschnitt bilden, der zwischen einem Regelminimalwert und einem Regelmaximalwert liegt. Das heißt, dass die variable Turbinengeometrie 15 im Regelbetrieb 26 derart betrieben wird, dass der Gesamtquerschnitt zumindest einem Regelminimalwert entspricht und somit eine Mindestanströmung des Turbinenrads 7 gewährleistet ist.

Eine entsprechende Stellung 28 der variablen Turbinengeometrie 15, in der besagter Regelminimalwert des Gesamtquerschnitts gebildet ist, ist in Figur 3 gezeigt. In dieser Stellung 28, nachfolgend auch erste Stellung 28 oder Minimal-Strömungs-Stellung 29 genannt, ist zwischen jedem der Leitelemente 16 und dem in Umfangsrichtung 19 benachbarten Leitelement 16 ein einen Querschnitt 20 der besagten Art bildender Spalt 30 ausgebildet. Im Regelbetrieb 26 kann die variable Turbinengeometrie 15 ausschließlich derart verstellt werden und/oder wird die variable Turbinengeometrie 15 ausschließlich derart verstellt, dass der Gesamtquerschnitt zumindest dem des in der ersten Stellung 18 gebildeten Regelminimalwert entspricht.

Das Verfahren kehrt anschließend zum ersten Verfahrensschritt 25 zurück, so dass erneut überprüft wird, ob die Temperatur der Schadstoffkonvertierungseinrichtung 11, insbesondere des Katalysators 12, oberhalb oder unterhalb der Schwelltemperatur liegt.

Liegt die Temperatur der Schadstoffkonvertierungseinrichtung 11, insbesondere des Katalysators 12, unterhalb der Schwelltemperatur, so wird das Brennkraftmaschinensystem 1 in einem Aufheizbetrieb 31 betrieben. Im Aufheizbetrieb 31 wird in einem Verfahrensschritt 32 die variable Turbinengeometrie 15 derart verstellt, dass der Gesamtquerschnitt unterhalb des Regelminimalwerts liegt, werden also die Leitelemente 16 weiter geschlossen als in der in Figur 3 gezeigten ersten Stellung 28, so dass die Spalte 30 jeweils zumindest kleiner sind als in der ersten Stellung 8.

Eine entsprechende Stellung der variablen Turbinengeometrie 15, nachfolgend auch zweite Stellung 33 oder Aufheizstellung 34 genannt, ist in Figur 4 gezeigt. In der Aufheizstellung 34 strömt ein reduzierter Anteil von Abgas zum Turbinenrad 7. Dementsprechend erhöht sich der Anteil des Abgases, welches über den Bypasskanal 14 zur Schadstoffkonvertierungseinrichtung 11 strömt. Hierdurch wird die Enthalpie im durch die Schadstoffkonvertierungseinrichtung 11, insbesondere den Katalysator 12, strömenden Abgas erhöht. Insbesondere erfolgt eine Reduzierung der durch die Durchströmung des Turbinenrads 7 bedingten thermischen und/oder kinetischen Verluste. In der Folge wird die Schadstoffkonvertierungseinrichtung 11, insbesondere der Katalysator 12, schneller aufgeheizt und erreicht die Schwelltemperatur schneller. In der Aufheizstellung 34 wird zudem das Wastegateventil 13 in die Bypassstellung verstellt und maximal geöffnet, derart, dass das Abgas möglichst ungehindert durch den Bypasskanal 14, das Turbinenrad 7 und die variable Turbinengeometrie 15 umgehend, zur Schadstoffkonvertierungseinrichtung 11 strömen kann.

Beim Wechsel vom Regelbetrieb 26 in den Aufheizbetrieb 31 wird zunächst das Wastegateventil 13 geöffnet, so dass beim Schließen der variablen Turbinengeometrie 15 über die Minimal-Strömungs-Stellung 29 hinaus in die Aufheizstellung 34 das Turbinenrad 7, und damit das Verdichterrad 8 nicht ungewünscht beschleunigt wird/werden und somit keine unerwünschte Ladedruckspitze erzeugt wird.

Das Verfahren kehrt nach dem Verfahrensschritt 32 zum ersten Verfahrensschritt 25 zurück. Ist die Temperatur der Schadstoffkonvertierungseinrichtung 11, insbesondere des Katalysators 12, weiterhin unterhalb der Schwelltemperatur, so verbleibt die variable Turbinengeometrie 15 in der Aufheizstellung 34. Überschreitet die Temperatur der Schadstoffkonvertierungseinrichtung 11 die Schwelltemperatur, so wird das Brennkraftmaschinensystem 1 im Regelbetrieb 26 betrieben.

Beim Wechsel vom Aufheizbetrieb 31 in den Regelbetrieb 26 wird zunächst die variable Turbinengeometrie 15 in eine Leerlaufstellung des Regelbetriebs 26 gebracht (nicht gezeigt), bevor das Wastegateventil 13 entsprechend der Leerlaufstellung des Regelbetriebs 26 geschlossen werden kann, damit das Turbinenrad 7, und damit das Verdichterrad 8, beim Öffnen der variablen Turbinengeometrie 15 von der Aufheizstellung 34 über die Minimal-Strömungs-Stellung 29 hinaus in die Leerlaufstellung nicht ungewünscht beschleunigt werden und somit keine unerwünschte Ladedruckspitze erzeugt wird. Die Leerlaufstellung ist diejenige Stellung der variablen Turbinengeometrie 15, in der in Leitelemente 16 einen Spalt 20 freigeben, um den Abgasgegendruck zu reduzieren.

Bei der in Figur 4 gezeigten Aufheizstellung 34 berühren sich die in Umfangsrichtung 19 aufeinanderfolgenden Leitelemente 16 jeweils gegenseitig. Auf diese Weise wird der in der ersten Stellung 28 vorhandene Spalt 30 zwischen den Leitelementen 16 gänzlich geschlossen bzw. eliminiert. Entsprechendes gilt also auch für die Querschnitte 20, so dass der Gesamtquerschnitt reduziert wird, insbesondere, unter Berücksichtigung von insbesondere in Axialrichtung 18 vorhandenen Toleranzen, eliminiert wird, so dass kein Abgas in Richtung des Verdichterrads 7 strömt.

In der Aufheizstellung 34 erfolgt ein reduzierter, insbesondere unterbleibender Antrieb des Verdichterrads 8 durch das Turbinenrad 7, so dass das Verdichterrad 8 die durch die Frischluftanlage 4 strömende Frischluft drosselt. In der Folge erhöht sich der Anteil an Kraftstoff im Frischluft-Kraftstoffgemisch in den Brennräumen 3, so dass mehr unverbrannte Kraftstoffbestandteile in die Abgasanlage 5 strömen und dort, insbesondere stromauf der Schadstoffkonvertierungseinrichtung 11 und/oder innerhalb der Schadstoffkonvertierungseinrichtung 11, nachverbrennen. Auf diese Weise wird das Aufheizen der Schadstoffkonvertierungseinrichtung 11 weiter beschleunigt.

Wie den Figuren 3 und 4 entnommen werden kann, weist das jeweilige Leitelement 16 bzw. die jeweilige Leitschaufel 17 eine in Richtung des in Umfangsrichtung 19 anschließenden Leitelements 16 zugewandte Spitze 35 sowie einen von der Spitze 35 entfernten Endabschnitt 36 auf. In der in Figur 4 gezeigten Aufheizstellung 34 liegt dabei die jeweilige Spitze 35 auf der dem Turbinenrad 7 zugewandten Fläche des Endabschnitts 36 des in Umfangsrichtung 19 benachbarten Leitelements 16 an. Auf diese Weise wird mit Hilfe der Leitelemente 16 eine in Umfangsrichtung 19 geschlossene, für das Abgas undurchströmbare Fläche gebildet.

Um auch vor dem Erreichen der Schwelltemperatur der Schadstoffkonvertierungseinrichtung 11, insbesondere des Katalysators 12, eine Reduzierung der im Abgas vorhandenen Schadstoffe zu erreichen, kann das Brennkraftmaschinensystem 1, wie in Figur 1 gezeigt, optional einen zusätzlich zur Schadstoffkonvertierungseinrichtung 11 vorgesehene Schadstoffreduzierungseinrichtung 37 aufweisen, die nachfolgend auch als Zusatz-Schadstoffreduzierungseinrichtung 37 bezeichnet wird und im gezeigten Beispiel stromauf der Schadstoffkonvertierungseinrichtung 11, im gezeigten Beispiel ferner im Bypasskanal 14 stromab des Wastegateventils 13, angeordnet ist. Die Zusatz-Schadstoffreduzierungseinrichtung 37 ist kleiner dimensioniert als die Schadstoffkonvertierungseinrichtung 11. Insbesondere ist ein Katalysator 38 der Zusatz-Schadstoffreduzierungseinrichtung 37, nachfolgend auch Zusatzkatalysator 38 genannt, kleiner als der Katalysator 12 der Schadstoffkonvertierungseinrichtung 11, der nachfolgende auch als Hauptkatalysator 12 bezeichnet wird. In der Folge ist die benötigte Energie zum Erreichen der Schwelltemperatur des Zusatzkatalysators 38 niedriger als die entsprechende Energie zum Erreichen der Schwelltemperatur des Hauptkatalysators 12. Folglich wird die Schwelltemperatur des Zusatzkatalysators 38 schneller erreicht, so dass eine Schadstoffreduzierung in der Zusatz-Schadstoffreduzierungseinrichtung 37 bereits vor dem Erreichen der Schwelltemperatur des Hauptkatalysators 12 beginnt.

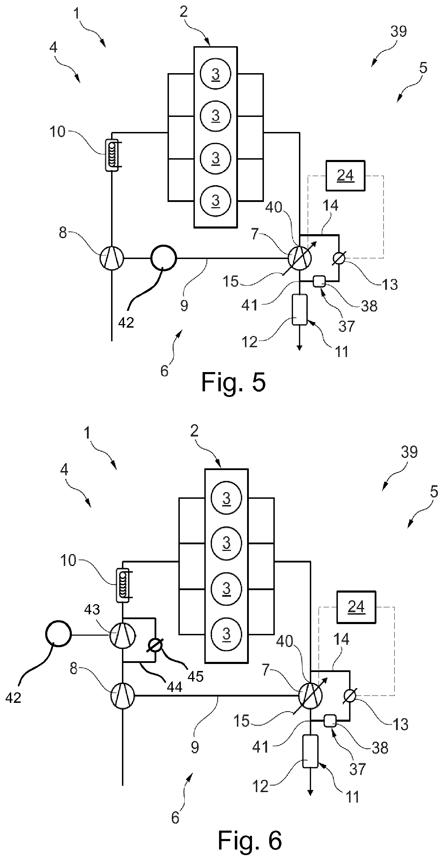

Die Figuren 5 und 6 zeigen jeweils weitere Ausführungsbeispiele des Brennkraftmaschinensystems 1. Diese Ausführungsbeispiele unterscheiden sich vom Ausführungsbeispiel der Figur 1 dadurch, dass das Brennkraftmaschinensystem 1 zusätzlich einen Elektromotor 42 zum Verdichten der Luft in der Frischluftanlage 4 aufweist. Im Ausführungsbeispiel der Figur 5 treibt der Elektromotor 42 im Betrieb das Verdichterrad 8 an. Im Ausführungsbeispiel der Figur 6 treibt der Elektromotor 42 im Betrieb einen Zusatzverdichter 43 an, der wie in Figur 6 gezeigt stromab des Verdichterrads 8 in der Frischluftanlage 4 eingebunden sein kann. Beim Ausführungsbeispiel der Figur 6 ist zudem ein den Zusatzverdichter 43 umgehender Zusatzverdichterbypass 44 vorgesehen, der über ein zugehöriges Zusatzverdichterbypass-Ventil 45 wahlweise freigegeben und gesperrt werden kann.

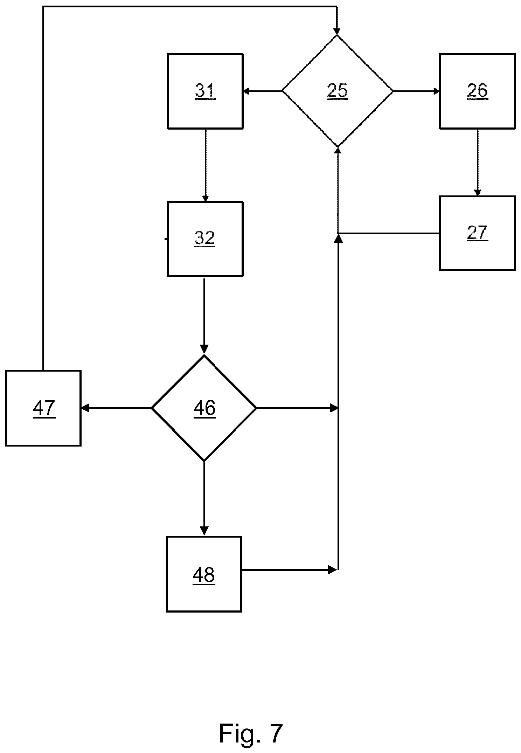

Das Brennkraftmaschinensystem 1 der Ausführungsbeispiele der Figuren 5 und 6 kann gemäß dem in Figur 7 gezeigten Flussdiagramm betrieben werden, der sich durch auf den Verfahrensschritt 32 nachfolgende Schritte vom Flussdiagramm der Figur 2 unterscheidet.

Demnach wird im Aufheizbetrieb 31 in einem Verfahrensschritt 46 neben der Temperatur der Schadstoffkonvertierungseinrichtung 11 auch eine Lastanforderung an die Brennkraftmaschine 2 berücksichtigt. Ist die Lastanforderung unterhalb eines ersten Grenzwerts, kehrt das Verfahren zum Verfahrensschritt 25 zurück. Das heißt, dass bei Lastanforderungen an die Brennkraftmaschine 2 unterhalb des ersten Grenzwerts die Maßnahmen im Verfahrensschritt 32 beibehalten werden und erneut die Temperatur der Schadstoffkonvertierungseinrichtung 11 gemäß Verfahrensschritt 25 überprüft wird und wie vorstehend zu Figur 2 beschrieben weiter verfahren wird.

Liegt die Lastanforderung an die Brennkraftmaschine 2 demgegenüber zwischen dem ersten Grenzwert und einem zweiten Grenzwert, der größer ist als der erste Grenzwert, wird in einem Verfahrensschritt 47 der Elektromotor 42 aktiviert, um, im Ausführungsbeispiel der Figur 5 mit dem Verdichterrad 8 und im Ausführungsbeispiel der Figur 6 mit dem Zusatzverdichter 43 Luft in der Frischluftanlage 4 zu verdichten. Danach kehrt das Verfahren zum Verfahrensschritt 25 zurück, um die Temperatur der Schadstoffkonvertierungseinrichtung 11 gemäß Verfahrensschritt 25 zu überprüfen und wie vorstehend beschrieben weiter zu verfahren.

Bei einer Lastanforderung an die Brennkraftmaschine 2, die oberhalb des zweiten Grenzwerts liegt, wird in einem Verfahrensschritt 48 das Brennkraftmaschinensystem 1 in einem herkömmlichen Kaltstartmodus betrieben. Im herkömmlichen Kaltstartmodus werden das Wastegateventil 13 und die variable Turbinengeometrie 15 entsprechend der Lastanforderungen verstellt. Das heißt insbesondere, dass die variable Turbinengeometrie 15 je nach Lastanforderung derart verstellt wird, dass die Leitelemente 16 in jeder Stellung einen Gesamtquerschnitt zwischen dem Regelminimalwert und dem Regelmaximalwert bilden. Dabei kann der Elektromotor 42, insbesondere im Ausführungsbeispiel der Figur 6, weiter betrieben werden. Danach kehrt das Verfahren zum Verfahrensschritt 25 zurück, um wie vorstehend beschrieben weiter zu verfahren.

Ist im Ausführungsbeispiel der Figur 6 der Elektromotor 42 deaktiviert, der Zusatzverdichter 43 also außer Betrieb, wird das Zusatzverdichterbypass-Ventil 45 vorteilhaft derart verstellt, dass die Luft über den Zusatzverdichterbypass 44 am Zusatzverdichter 43 vorbeiströmt.

Wird die Brennkraftmaschine 2 gestartet und liegt die Temperatur der Schadstoffkonvertierungseinrichtung 11 unterhalb des Schwellwerts, ist es bevorzugt, wenn in einem jeweils vor dem Verfahrensschritt einmalig durchgeführtem, nicht gezeigten, Verfahrensschritt bereits vor dem Starten der Brennkraftmaschine die variable Turbinengeometrie 15 in die Aufheizstellung 34 und/oder das Wastegateventil 13 geöffnet wird.

Das Brennkraftmaschinensystem 1 kann prinzipiell in einer beliebigen Anwendung zum Einsatz kommen. Das Brennkraftmaschinensystem 1 ist insbesondere Bestandteil eines Kraftfahrzeugs 39, in welchem die Brennkraftmaschine 2 zum Antreiben, auch zusätzlich oder ergänzend zu einem nicht gezeigten elektrischen Antrieb, zum Einsatz kommt.

## Patentansprüche

1. Verfahren zum Betreiben eines Brennkraftmaschinensystems (1), wobei das Brennkraftmaschinensystem (1) umfasst:
- eine Brennkraftmaschine (2), die im Betrieb Abgas erzeugt,
- eine Frischluftanlage (4) zur Zuführung von Frischluft zur Brennkraftmaschine (2) sowie eine Abgasanlage (5) zum Abführen von Abgas,
- einen Abgasturbolader (6), der ein in der Frischluftanlage (4) eingebundenes Verdichterrad (8) zum Verdichten der Frischluft und ein in der Abgasanlage (5) eingebundenes Turbinenrad (7) zum Antreiben des Verdichterrads (8) aufweist,
- eine Schadstoffkonvertierungseinrichtung (11) zur Reduzierung von Schadstoffen im Abgas, die in der Abgasanlage (5) eingebunden ist und die derart ausgestaltet ist, dass sie eine Schwelltemperatur aufweist, oberhalb welcher Schadstoffe reduziert werden,
- eine variable Turbinengeometrie (15) des Abgasturboladers (6), welche das Turbinenrad (7) in einer Umfangsrichtung (19) umgebende und verstellbare Leitelemente (16) aufweist, welche in der Umfangsrichtung (19) aufeinanderfolgen und in ihrer jeweiligen Stellung einen für Abgas durchströmbaren Gesamtquerschnitt bilden,
wobei in einem Regelbetrieb (26), in welchem die Schadstoffkonvertierungseinrichtung (11) eine Temperatur oberhalb der Schwelltemperatur aufweist, die Leitelemente (16) derart verstellt werden, dass der Gesamtquerschnitt zwischen einem Regelminimalwert und einem Regelmaximalwert beträgt,
wobei das Brennkraftmaschinensystem (1) bei Temperaturen der Schadstoffkonvertierungseinrichtung (11) unterhalb der Schwelltemperatur in einem Aufheizbetrieb (31) betrieben wird, in dem die Leitelemente (16) in einer Aufheizstellung (34) verstellt werden, in der der Gesamtquerschnitt kleiner ist als der Regelminimalwert,
**dadurch gekennzeichnet,**
**dass** der Abgasturbolader (6) ein verstellbares Wastegateventil (13) aufweist, welches in einer Bypassstellung Abgas über einen Bypasskanal (14) am Turbinenrad (7) vorbeiführt,
**dass** das Wastegateventil (13) im Aufheizbetrieb (31) in die Bypassstellung verstellt wird.

2. Verfahren nach Anspruch 1,
**dadurch gekennzeichnet,**
**dass** die variable Turbinengeometrie (15) im Aufheizbetrieb (34) geschlossen wird, derart, dass die Leitelemente (16) in der Aufheizstellung (34) in Umfangsrichtung (19) eine geschlossene Fläche bilden.

3. Verfahren nach Anspruch 1 oder 2,
**dadurch gekennzeichnet,**
**dass** das Wastegateventil (13) im Aufheizbetrieb (31) maximal geöffnet wird.

4. Verfahren nach einem der Ansprüche 1 bis 3,
**dadurch gekennzeichnet,**
- **dass** das Brennkraftmaschinensystem (1) einen Elektromotor (42) aufweist, der im Betrieb die Luft in der Frischluftanlage (4) verdichtet,
- **dass** der Elektromotor (42) im Aufheizbetrieb (31) zum Verdichten der Luft betrieben wird, wenn eine Lastanforderung an die Brennkraftmaschine (2) einen vorgegebenen ersten Grenzwert überschreitet.

5. Verfahren nach Anspruch 4,
**dadurch gekennzeichnet,**
**dass** im Aufheizbetrieb (31) beim Überschreiten eines im Vergleich zum ersten Grenzwert größeren zweiten Grenzwerts der Lastanforderung an die Brennkraftmaschine (2) vom Aufheizbetrieb (31) in einen herkömmlichen Kaltstartmodus (26) umgestellt wird, in welchem das Wastegateventil (13) und die variable Turbinengeometrie (15) entsprechend der Lastanforderung verstellt werden.

6. Brennkraftmaschinensystem (1) umfassend:
- eine Brennkraftmaschine (2) die im Betrieb Abgas erzeugt,
- eine Frischluftanlage (4) zur Zuführung von Frischluft zur Brennkraftmaschine (2), sowie eine Abgasanlage (5) zum Abführen von Abgas,
- einen Abgasturbolader (6), der ein in der Frischluftanlage (4) eingebundenes Verdichterrad (8) zum Verdichten der Frischluft und ein in der Abgasanlage (5) eingebundenes Turbinenrad (7) zum Antreiben des Verdichterrads (8) aufweist,
- eine Schadstoffkonvertierungseinrichtung (11) zur Reduzierung von Schadstoffen im Abgas, die in der Abgasanlage (5) eingebunden ist,
- eine variable Turbinengeometrie (15) des Abgasturboladers (6), welche das Turbinenrad (7) in einer Umfangsrichtung (19) umgebende und verstellbare Leitelemente (16) aufweist, welche in der Umfangsrichtung (19) aufeinanderfolgen und in ihrer jeweiligen Stellung einen für Abgas durchströmbaren Gesamtquerschnitt bilden,
- eine Steuereinrichtung (24) zum Betrieben des Brennkraftmaschinensystems (1), welche kommunizierend mit dem Abgasturbolader (6) verbunden ist,
**dadurch gekennzeichnet,**
**dass** der Abgasturbolader (6) ein verstellbares Wastegateventil (13) aufweist, welches zwischen einer Schließstellung und einer Bypassstellung verstellbar ist, und welches in der Bypassstellung Abgas über einen Bypasskanal (14) am Turbinenrad (7) vorbeiführt, und dass das Brennkraftmaschinensystem (1) derart ausgestaltet ist, dass es gemäß dem Verfahren nach einem der Ansprüche 1 bis 5 betrieben wird.

7. Brennkraftmaschinensystem nach Anspruch 6,
**dadurch gekennzeichnet,**
**dass** das Brennkraftmaschinensystem (1) einen Elektromotor (42) zum Verdichten der Luft in der Frischluftanlage (4) aufweist, der im Betrieb das Verdichterrad (8) und/oder einen vom Verdichterrad (8) separaten Zusatz-Verdichter (43) antreibt.

8. Brennkraftmaschinensystem nach Anspruch 6 oder 7,
**dadurch gekennzeichnet,**
**dass** in der Aufheizstellung (34) in Umfangsrichtung (19) benachbarte Leitelemente (16) sich berühren.

9. Brennkraftmaschinensystem nach Anspruch 8,
**dadurch gekennzeichnet,**
**dass** in der Aufheizstellung (34) in Umfangsrichtung (19) benachbarte Leitelemente (16) aufeinander aufliegen.

10. Brennkraftmaschinensystem nach Anspruch 8 oder 9,
**dadurch gekennzeichnet,**
- **dass** das jeweilige Leitelement (16) eine in der Aufheizstellung (34) dem in Umfangsrichtung (19) benachbarten Leitelement (16) zugewandte Spitze (35) und einen von der Spitze entfernten Endabschnitt (36) aufweist,
- **dass** in der Aufheizstellung (34) das jeweilige Leitelement (16) mit seiner Spitze (35) auf dem Endabschnitt (36) des in Umfangsrichtung (19) anschließenden Leitelements (16) aufliegt.

11. Brennkraftmaschinensystem nach Anspruch 10,
**dadurch gekennzeichnet,**
**dass** in der Aufheizstellung (14) die Spitze (35) auf der dem Turbinenrad (7) zugewandten Fläche des Endabschnitts (36) aufliegt.

12. Brennkraftmaschinensystem nach einem der Ansprüche 6 bis 11,
**dadurch gekennzeichnet,**
**dass** die Schadstoffkonvertierungseinrichtung (11) stromab des Turbinenrads (7) und stromab des Bypasskanals (14) in der Abgasanlage (5) eingebunden ist.

13. Brennkraftmaschinensystem nach einem der Ansprüche 6 bis 12,
**dadurch gekennzeichnet,**
- **dass** in der Abgasanlage (5) eine Zusatz-Schadstoffreduzierungseinrichtung (37) derart eingebunden ist, dass das durch den Bypasskanal (14) strömende Abgas durch die Zusatz-Schadstoffreduzierungseinrichtung (37) strömt,
- **dass** die Zusatz-Schadstoffreduzierungseinrichtung (37) derart ausgestaltet ist, dass sie zum Erreichen ihrer Betriebstemperatur einer geringeren thermischen Energie bedarf als die Schadstoffkonvertierungseinrichtung (11).

14. Brennkraftmaschinensystem nach Anspruch 13,
**dadurch gekennzeichnet,**
**dass** die Zusatz-Schadstoffreduzierungseinrichtung (37) stromauf der Schadstoffkonvertierungseinrichtung (11), insbesondere im Bypasskanal (14), in der Abgasanlage (5) eingebunden ist.

## Claims

1. Method for operating an internal combustion engine system (1), wherein the internal combustion engine system (1) comprises:
- an internal combustion engine (2), which in operation produces exhaust gas,
- a fresh air system (4) for feeding fresh air to the internal combustion engine (2) as well as an exhaust system (5) for discharging the exhaust gas,
- an exhaust gas turbocharger (6) which has a compressor wheel (8) incorporated into the fresh air system (4) for compressing the fresh air and a turbine wheel (7) incorporated into the exhaust gas system (5) for driving the compressor wheel (8),
- a pollutant conversion device (11) for reducing pollutants in the exhaust gas, which is incorporated into the exhaust gas system (5) and is configured in such a way that it has a threshold temperature above which pollutants are reduced,
- a variable turbine geometry (15) of the exhaust gas turbocharger (6), which has guide elements (16) that surround the turbine wheel (7) in a circumferential direction (19) and are adjustable, which follow one another in the circumferential direction (19) and in their respective position define an overall cross-section for exhaust gas to flow through,
wherein in normal operation (26), in which the pollutant conversion device (11) has a temperature above the threshold temperature, the guide elements (16) are adjusted in such a way that the overall cross-section is between a normal minimum value and a normal maximum value,
wherein at temperatures of the pollutant conversion device (11) below the threshold temperature the internal combustion engine system (1) is operated in a heating-up mode (31), in which mode the guide elements (16) are adjusted to a heating-up position (34), in which the overall cross-section is smaller than the normal minimum value,
**characterised in that**
the exhaust gas turbocharger (6) has an adjustable wastegate valve (13), which in a bypass position guides exhaust gas past the turbine wheel (7) via a bypass channel (14),
in the heating-up mode (31) the wastegate valve (13) is adjusted into the bypass position.

2. Method according to claim 1,
**characterised in that**
in the heating-up mode (34) the variable turbine geometry (15) is closed, in such a way that the guide elements (16) form, in the heating-up position (34), an area that is closed in the circumferential direction (19).

3. Method according to claim 1 or 2,
**characterised in that**
in the heating-up mode (31) the wastegate valve (13) is opened to the maximum extent.

4. Method according to any one of claims 1 to 3,
**characterised in that**
- the internal combustion engine system (1) has an electro-motor (42), which in operation compresses the air in the fresh air system (4),
- the electro-motor (42) is operated in the heating-up mode (31) for compressing the air if a load requirement on the internal combustion engine (2) exceeds a predefined first limit value.

5. Method according to claim 4,
**characterised in that**
in heating-up mode (31), when a second limit value of the load requirement of the internal combustion engine (2) that is greater in comparison with the first limit value is exceeded, a change-over occurs from heating-up mode (31) to a conventional cold-start mode (26), in which the wastegate valve (13) and the variable turbine geometry (15) are adjusted in accordance with the load requirement.

6. Internal combustion engine system (1) comprising:
- an internal combustion engine (2), which in operation produces exhaust gas,
- a fresh air system (4) for feeding fresh air to the internal combustion engine (2) as well as an exhaust system (5) for discharging the exhaust gas,
- an exhaust gas turbocharger (6) which has a compressor wheel (8) incorporated into the fresh air system (4) for compressing the fresh air and a turbine wheel (7) incorporated into the exhaust gas system (5) for driving the compressor wheel (8),
- a pollutant conversion device (11) for reducing pollutants in the exhaust gas, which is incorporated into the exhaust gas system (5),
- a variable turbine geometry (15) of the exhaust gas turbocharger (6), which has guide elements (16) that surround the turbine wheel (7) in a circumferential direction (19) and are adjustable, which follow one another in the circumferential direction (19) and in their respective position define an overall cross-section for exhaust gas to flow through,
- a controller (24) for operating the internal combustion engine system (1), which is connected for communication with the exhaust gas turbocharger (6),
**characterised in that**
the exhaust gas turbocharger (6) has an adjustable wastegate vale (13), which is adjustable between a closed position and a bypass position, and which in the bypass position guides exhaust gas past the turbine wheel (7) via a bypass channel (14), and
the internal combustion engine system (1) is configured in such a way that it is operated in accordance with the method of any one of claims 1 to 5.

7. Internal combustion engine system according to claim 6,
**characterised in that**
the internal combustion engine system (1) has an electro-motor (42) for compressing the air in the fresh air system (4), which electro-motor in operation drives the compressor wheel (8) and/or an auxiliary compressor (43) that is separate from the compressor wheel (8).

8. Internal combustion engine system according to claim 6 or 7,
**characterised in that**
in the heating-up position (34) guide elements (16) that are adjacent in the circumferential direction (19) are in contact with each other.

9. Internal combustion engine system according to claim 8,
**characterised in that**
in the heating-up position (34) guide elements (16) that are adjacent in the circumferential direction (19) lie on top of each other.

10. Internal combustion engine system according to claim 8 or 9,
**characterised in that**
- the respective guide element (16) has a tip (35) that in the heating-up position (34) faces the guide element (16) that is adjacent in the circumferential direction (19) and an end portion (36) that is remote from the tip, and
- in the heating-up position (34) the respective guide element (16) lies with its tip (35) on the end portion (36) of the adjoining guide element (16) in the circumferential direction (19).

11. Internal combustion engine system according to claim 10,
**characterised in that**
in the heating-up position (14) the tip (35) is supported on the surface of the end portion (36) facing towards the turbine wheel (7).

12. Internal combustion engine system according to any one of claims 6 to 11,
**characterised in that**
the pollutant conversion device (11) is incorporated into the exhaust gas system (5) downstream of the turbine wheel (7) and downstream of the bypass channel (14).

13. Internal combustion engine system according to any one of claims 6 to 12,
**characterised in that**
- an auxiliary pollutant reduction device (37) is incorporated into the exhaust gas system (5) in such a way that the exhaust gas flowing through the bypass channel (14) flows through the auxiliary pollutant reduction device (37),
- the auxiliary pollutant reduction device (37) is configured in such a way that, to reach its operating temperature, it requires a lower thermal energy that the pollutant conversion device (11).

14. Internal combustion engine system according to claim 13,
**characterised in that**
the auxiliary pollutant reduction device (37) is incorporated into the exhaust gas system (5) upstream of the pollutant conversion device (11), in particular in the bypass channel (14).

## Revendications

1. Procédé de fonctionnement d'un système de moteur à combustion interne (1), dans lequel le système de moteur à combustion interne (1) comporte :
- un moteur à combustion interne (2) qui génère en fonctionnement du gaz d'échappement,
- une installation d'air frais (4) pour la fourniture d'air frais au moteur à combustion interne (2) ainsi qu'une installation de gaz d'échappement (5) pour l'évacuation de gaz d'échappement,
- un turbocompresseur à gaz d'échappement (6) qui présente une roue de compresseur (8) intégrée dans l'installation d'air frais (4) pour la compression de l'air frais et une roue de turbine (7) intégrée dans l'installation de gaz d'échappement (5) pour l'entraînement de la roue de compresseur (8),
- un dispositif de conversion de polluant (11) pour la réduction de polluants dans le gaz d'échappement qui est intégré dans l'installation de gaz d'échappement (5) et qui est configuré de manière à présenter une température seuil, au-dessus de laquelle des polluants sont réduits,
- une géométrie de turbine variable (15) du turbocompresseur à gaz d'échappement (6) qui présente des éléments de guidage (16) réglables et entourant la roue de turbine (7) dans un sens périphérique (19) qui se suivent dans le sens périphérique (19) et forment dans leur position respective une section transversale entière pouvant être traversée pour du gaz d'échappement,
dans lequel dans un mode de régulation (26), dans lequel le dispositif de conversion de polluant (11) présente une température au-dessus de la température seuil, les éléments de guidage (16) sont réglés de telle manière que la section transversale entière soit comprise entre une valeur minimale de régulation et une valeur maximale de régulation,
dans lequel le système de moteur à combustion interne (1) est actionné à des températures du dispositif de conversion de polluant (11) en dessous de la température seuil dans un mode de chauffage (31), dans lequel les éléments de guidage (16) sont réglés dans une position de chauffage (34), dans laquelle la section transversale entière est inférieure à la valeur minimale de régulation,
**caractérisé en ce**
**que** le turbocompresseur à gaz d'échappement (6) présente une soupape de décharge (13) réglable qui passe dans une position de dérivation du gaz d'échappement par le biais d'un canal de dérivation (14) devant la roue de turbine (7),
**que** la soupape de décharge (13) est réglée dans le mode de chauffage (31) dans la position de dérivation.

2. Procédé selon la revendication 1,
**caractérisé en ce**
**que** la géométrie de turbine variable (15) est fermée dans le mode de chauffage (34) de telle manière que les éléments de guidage (16) forment une surface fermée dans la position de chauffage (34) dans le sens périphérique (19).

3. Procédé selon la revendication 1 ou 2,
**caractérisé en ce**
**que** la soupape de décharge (13) est ouverte au maximum dans le mode de chauffage (31).

4. Procédé selon l'une des revendications 1 à 3,
**caractérisé en ce**
- **que** le système de moteur à combustion interne (1) présente un moteur électrique (42) qui comprime en fonctionnement l'air dans l'installation d'air frais (4),
- **que** le moteur électrique (42) est actionné dans le mode de chauffage (31) pour la compression de l'air lorsqu'une exigence de charge au moteur à combustion interne (2) dépasse une première valeur limite prédéfinie.

5. Procédé selon la revendication 4,
**caractérisé en ce**
**que** dans le mode de chauffage (31) lors du dépassement d'une seconde valeur limite supérieure par rapport à la première valeur limite de l'exigence de charge au moteur à combustion interne (2) le mode de chauffage (31) passe en un mode de démarrage à froid (26) traditionnel, dans lequel la soupape de décharge (13) et la géométrie de turbine variable (15) sont réglées selon l'exigence de charge.

6. Système de moteur à combustion interne (1) comprenant :
- un moteur à combustion interne (2) qui génère en fonctionnement du gaz d'échappement,
- une installation d'air frais (4) pour la fourniture d'air frais au moteur à combustion interne (2), ainsi qu'une installation de gaz d'échappement (5) pour l'évacuation de gaz d'échappement,
- un turbocompresseur à gaz d'échappement (6) qui présente une roue de compresseur (8) intégrée dans l'installation d'air frais (4) pour la compression de l'air frais et une roue de turbine (7) intégrée dans l'installation de gaz d'échappement (5) pour l'entraînement de la roue de compresseur (8),
- un dispositif de conversion de polluant (11) pour la réduction de polluants dans le gaz d'échappement qui est intégré dans l'installation de gaz d'échappement (5),
- une géométrie de turbine variable (15) du turbocompresseur à gaz d'échappement (6) qui présente des éléments de guidage (16) réglables et entourant la roue de turbine (7) dans un sens périphérique (19) qui se suivent dans le sens périphérique (19) et forment dans leur position respective une section transversale entière pouvant être traversée pour du gaz d'échappement,
- un dispositif de commande (24) pour le fonctionnement du système de moteur à combustion interne (1) qui est relié par communication au turbocompresseur à gaz d'échappement (6),
**caractérisé en ce**
**que** le turbocompresseur à gaz d'échappement (6) présente une soupape de décharge (13) réglable qui est réglable entre une position de fermeture et une position de dérivation, et qui passe dans la position de dérivation du gaz d'échappement par le biais d'un canal de dérivation (14) devant la roue de turbine (7), et
**que** le système de moteur à combustion interne (1) est configuré de telle manière qu'il soit actionné selon le procédé selon l'une des revendications 1 à 5.

7. Système de moteur à combustion interne selon la revendication 6,
**caractérisé en ce**
**que** le système de moteur à combustion interne (1) présente un moteur électrique (42) pour la compression de l'air dans l'installation d'air frais (4) qui entraîne en fonctionnement la roue de compresseur (8) et/ou un compresseur supplémentaire (43) séparé de la roue de compresseur (8).

8. Système de moteur à combustion interne selon la revendication 6 ou 7,
**caractérisé en ce**
**que** dans la position de chauffage (34) des éléments de guidage (16) contigus dans le sens périphérique (19) se touchent.

9. Système de moteur à combustion interne selon la revendication 8,
**caractérisé en ce**
**que** dans la position de chauffage (34) des éléments de guidage (16) contigus dans le sens périphérique (19) reposent l'un sur l'autre.

10. Système de moteur à combustion interne selon la revendication 8 ou 9,
**caractérisé en ce**
- **que** l'élément de guidage (16) respectif présente une pointe (35) tournée dans la position de chauffage (34) vers l'élément de guidage (16) contigu dans le sens périphérique (19) et une section d'extrémité (36) éloignée de la pointe,
- **que** dans la position de chauffage (34) l'élément de guidage (16) respectif repose avec sa pointe (35) sur la section d'extrémité (36) de l'élément de guidage (16) contigu dans le sens périphérique (19).

11. Système de moteur à combustion interne selon la revendication 10,
**caractérisé en ce**
**que** dans la position de chauffage (14) la pointe (35) repose sur la surface tournée vers la roue de turbine (7) de la section d'extrémité (36).

12. Système de moteur à combustion interne selon l'une des revendications 6 à 11,
**caractérisé en ce**
**que** le dispositif de conversion de polluant (11) est intégré en aval de la roue de turbine (7) et en aval du canal de dérivation (14) dans l'installation de gaz d'échappement (5).

13. Système de moteur à combustion interne selon l'une des revendications 6 à 12,
**caractérisé en ce**
- **qu'**un dispositif de réduction de polluant (37) supplémentaire est intégré dans l'installation de gaz d'échappement (5) de telle manière que le gaz d'échappement circulant par le canal de dérivation (14) circule par le dispositif de réduction de polluant (37) supplémentaire,
- **que** le dispositif de réduction de polluant (37) supplémentaire est configuré de telle manière qu'il nécessite lors de l'atteinte de sa température de fonctionnement une énergie thermique plus faible que le dispositif de conversion de polluant (11).

14. Système de moteur à combustion interne selon la revendication 13,
**caractérisé en ce**
**que** le dispositif de réduction de polluant (37) supplémentaire est intégré en amont du dispositif de conversion de polluant (11), en particulier dans le canal de dérivation (14), dans l'installation de gaz d'échappement (5).
